# EUROPÄISCHE PATENTSCHRIFT

(11) **EP 3 615 962 B1**
(45) Veröffentlichungstag und Bekanntmachung des Hinweises auf die Patenterteilung: **09.06.2021**
(21) Anmeldenummer: 18719483.2
(22) Anmeldetag: 12.04.2018
(51) Int. Cl.: G01S 17/931, G01S 7/481, G01S 17/86, G02B 26/10, G01S 7/484, G01S 7/497, G01S 17/42

(54) **STEUERUNG EINER GERICHTETEN LICHTQUELLE**
CONTROLLING A DIRECTED LIGHT SOURCE
COMMANDE D'UNE SOURCE DE LUMIÈRE DIRIGÉE

(30) Priorität: 25.04.2017 DE 102017206923
(43) Veröffentlichungstag der Anmeldung: 04.03.2020
(73) Patentinhaber: Robert Bosch GmbH, 70442 Stuttgart (DE)
(72) Erfinder: REPPICH, Raimund, 71636 Ludwigsburg (DE); BLASE, Benjamin, 74321 Bietigheim-Bissingen (DE); KAMIL, Mustafa, 71229 Leonberg (DE)
(86) Internationale Anmeldenummer: PCT/EP2018/059371
(87) Internationale Veröffentlichungsnummer: WO 2018/197225

(56) Entgegenhaltungen:
- WO-A1-2016/169914
- DE-A1- 19 707 936
- DE-A1- 19 910 667
- DE-A1-102014 211 073
- DE-A1-102015 217 908
- US-A1- 2017 082 736

## Beschreibung

### Stand der Technik

Die Erfindung betrifft die Steuerung einer gerichteten Lichtquelle. Insbesondere betrifft die Erfindung die Steuerung einer Lichtquelle einer optischen Abtasteinrichtung.

### Stand der Technik

An Bord eines Kraftfahrzeugs ist eine optische Abtasteinrichtung vorgesehen, um ein Umfeld des Kraftfahrzeugs abzutasten. Insbesondere soll ein Objekt in einem Abtastbereich erfasst und bezüglich seiner Entfernung und/oder Geschwindigkeit bezüglich des Kraftfahrzeugs abgetastet werden. Dazu beleuchtet ein Laser den Abtastbereich und eine Empfangseinrichtung empfängt reflektiertes Licht. Üblicherweise wird der Abtastbereich sequentiell abgetastet, indem ein punktförmiger Laserstrahl beispielsweise in übereinander liegenden Zeilen geführt wird. Dazu kann beispielsweise ein rotierender, polygonaler Spiegel verwendet werden.

Eine Reichweite der Abtasteinrichtung kann von der Leistung des Laserstrahls abhängig sein. Andererseits muss die Leistung begrenzt werden um zu verhindern, dass ein in ein menschliches Auge fallender Laserstrahl dort zu einer Verletzung führt. Die Norm IEC 60825-1 definiert Grenzwerte, um eine Augensicherheit zu gewährleisten.

Das Kraftfahrzeug kann Vibrationen oder Erschütterungen ausgesetzt sein, sodass der Laserstrahl nicht immer in die beabsichtigte Richtung weisen kann. Ein Punkt im Umfeld des Kraftfahrzeugs kann dadurch länger der Laserstrahlung ausgesetzt sein, sodass die an diesem Punkt eintreffende Energie im Mittel über die Zeit erhöht sein kann. Um die Augensicherheit einzuhalten, musste bisher die Lichtleistung reduziert werden, womit auch die Reichweite verringert wurde

Die Druckschrift DE19707936 A1 offenbart, dass bei in einem Fahrzeug verbauten Sensoren die Leistung des Laserstrahls in Abhängigkeit von der Geschwindigkeit des Fahrzeugs angepasst wird, um Augenschäden durch den Laserstrahl bei Person in der Umgebung des Fahrzeugs zu vermeiden.

Eine der vorliegenden Erfindung zugrundeliegenden Aufgabe besteht darin, eine verbesserte Technik zum Steuern einer gerichteten Lichtquelle anzugeben. Die Erfindung löst diese Aufgabe mittels der Gegenstände der unabhängigen Ansprüche. Unteransprüche geben bevorzugte Ausführungsformen wieder.

### Offenbarung der Erfindung

Eine gerichtete Lichtquelle stellt einen Lichtkegel bereit, der über einen vorbestimmten Bereich geführt wird. Ein Verfahren zum Steuern der Lichtquelle umfasst Schritte des Bestimmens einer Bewegung der Lichtquelle; des Schätzens einer bevorstehenden Änderung eines mittels des Lichtkegels beleuchteten Abschnitts des Bereichs aufgrund der bestimmten Bewegung; des Bestimmens, dass der Abschnitt durch den geänderten Lichtkegel voraussichtlich länger als vorbestimmt belichtet wird; und des Bereitstellens eines Verdunkelungssignals für die Lichtquelle.

Als Lichtkegel wird vorliegend der Teil des Raums betrachtet, durch den von einer Lichtquelle ausgesandtes Licht sich ausbreitet. Die Lichtquelle kann einen Laser umfassen, wobei das von der Lichtquelle ausgesandte Licht scharf gebündelt sein kann, sodass ein Lichtkegel, den die Lichtquelle aussendet, nahe an einer zylindrischen Form ist und sich in der Entfernung nur minimal weitet. Der mittels des Lichtkegels beleuchtete Abschnitt kann als eine Fläche modelliert werden, die senkrecht auf der Ausbreitungsrichtung des Lichtkegels steht. Ein durch den Lichtkegel bewirkter Energieeintrag auf diese Fläche innerhalb einer vorbestimmten Zeit soll einen vorbestimmten Schwellenwert nicht übersteigen. Der Schwellenwert kann beispielsweise der Norm IEC 60825-1 oder einer vergleichbaren Norm entnommen werden. Ein erster beispielhafter Grenzwert betrifft die maximale Energie bei einem einzelnen Lichtimpuls, ein zweiter beispielhafter Grenzwert eine akkumulierte Energie über mehrere Lichtimpulse und ein dritter beispielhafter Grenzwert ein reduziertes Einzelimpulskriterium über mehrere Lichtimpulse. Insbesondere zur Einhaltung dieses dritten Grenzwerts kann die vorliegende Erfindung genutzt werden.

Das Verfahren kann sicherstellen, dass die Lichtquelle abgedunkelt wird, wenn eine Überbelichtung des Abschnitts zu befürchten ist. Dadurch kann sichergestellt werden, dass ein menschliches oder tierisches Auge, das sich in dem Abschnitt befindet, nicht durch eine verlängerte Belichtung geschädigt wird. Die Sendeleistung der Lichtquelle kann unter Einhaltung der Augensicherheit relativ groß gewählt sein, sodass eine Reflektion des Lichts auch in einer relativ großen Entfernung von der Lichtquelle noch sicher erfasst werden kann. Eine Abtastleistung einer optischen Sensoreinrichtung, die den Lichtkegel steuert, kann erhöht sein.

In einer Ausführungsform sind mehrere überschneidungsfreie Abschnitte im Bereich vorbestimmt und die Abschnitte werden nacheinander mittels des Lichtkegels für jeweils eine vorbestimmte Zeit beleuchtet. Dazu kann die Lichtquelle diskontinuierlich und insbesondere intermittierend betrieben werden. Die Abschnitte können nacheinander jeweils mittels eines vorbestimmten Lichtimpulses beleuchtet werden. Eine teilweise oder vollständige Mehrfachbeleuchtung eines der Abschnitte innerhalb eines vorbestimmten Zeitfensters kann durch das Verfahren vermieden werden. Das Zeitfenster kann als Randbedingung eines Schwellenwerts für die Energie des Lichtkegels vorbestimmt sein, die zur Sicherstellung der Augensicherheit am Abschnitt nicht überschritten werden soll.

Es ist bevorzugt, dass die voraussichtliche Änderung mittels eines Kalman-Filters bestimmt wird. Der Kalman-Filter kann so parametrisiert werden, dass eine sichere Vorhersage innerhalb eines Zeitbereichs möglich ist, der für das Auswerten aller Signale und das Verdunkeln der Lichtquelle erforderlich ist. Diese Zeit liegt üblicherweise im Bereich von einigen 10 bis einigen 100 ms Durch den Kalman-Filter kann insbesondere eine Bestimmungsgenauigkeit berücksichtigt werden, die angibt, wie wahrscheinlich die Vorhersage der Änderung des Lichtkegels eintreffen wird. Ist die Bestimmungsgenauigkeit klein, so kann das Verdunklungssignal vorsorglich ausgegeben werden, auch wenn nur eine kleine Winkelüberschneidung über die Zeit zu erwarten ist. Ist die Bestimmungsgenauigkeit hingegen hoch, so kann das Verdunklungssignal erst dann gegeben werden, wenn eine größere Winkelüberschneidung über die Zeit zu erwarten ist.

Die Änderung kann eine Ausrichtung der Lichtquelle betreffen. Beispielsweise kann die Lichtquelle eine Linse oder einen Spiegel umfassen, der durch die Bewegung der Lichtquelle die Richtung des Lichtkegels verändert. Dabei kann die Lichtquelle ein elastisches System darstellen, sodass eine Auslenkung der Lichtquelle unter Umständen verzögert auf das ablenkende oder fokussierende Element wirkt.

Die Änderung kann auch einen Öffnungswinkel der Lichtquelle betreffen. Insbesondere dann, wenn die Lichtquelle mehrere reflektive oder refraktive Elemente enthält, kann durch einen Stoß oder eine rasche Bewegung der Lichtkegel defokussiert werden. Die veränderte Form des Lichtkegels kann bei der Bestimmung der bevorstehenden Winkelüberschneidung über die Zeit berücksichtigt werden.

In einer weiteren Ausführungsform wird eine Ungenauigkeit von vorliegenden Informationen über den Lichtkegel berücksichtigt. Beispielsweise kann eine Ausstrahlrichtung des Lichtkegels unter der Einwirkung einer Beschleunigung auf die Lichtquelle nur mit verringerter Genauigkeit bekannt sein. Um sicher zu verhindern, dass ein Augenschaden auftreten könnte, kann der Lichtkegel mit einer vorbestimmten Ungenauigkeit angenommen werden. Geometrisch ausgedrückt wird dadurch der berücksichtigte Lichtkegel größer gewählt. Je größer die bekannte Ungenauigkeit der vorliegenden Informationen ist, desto größer kann der berücksichtigte Durchmesser der Lichtquelle sein.

Eine Steuervorrichtung für eine gerichtete Lichtquelle, deren Lichtkegel über einen vorbestimmten Bereich geführt wird, umfasst eine Abtasteinrichtung zur Bestimmung einer Bewegung der Lichtquelle; eine Verarbeitungseinrichtung, die dazu eingerichtet ist, eine bevorstehende Änderung eines mittels des Lichtkegels beleuchteten Abschnitts des Bereichs aufgrund der bestimmten Bewegung zu schätzen; und eine Schnittstelle zur Bereitstellung eines Verdunkelungssignals für die Lichtquelle, falls der Abschnitt durch den geänderten Lichtkegel voraussichtlich länger als vorbestimmt belichtet wird.

Die gerichtete Lichtquelle kann Teil einer optischen Abtasteinrichtung, eines adaptiven Laser-Scheinwerfers oder weiteren Sensoreinrichtung sein. Die Steuervorrichtung kann zur Abdunkelung der Lichtquelle eingerichtet sein. Das Abdunkeln kann insbesondere ein Abschalten der Lichtquelle umfassen. Die gerichtete Lichtquelle ist bevorzugt zum Aussenden von Laserlicht eingerichtet. Dabei kann ein Frequenzbereich des Lichts sehr klein sein, sodass von monochromatischem Licht gesprochen werden kann.

Eine optische Sensoreinrichtung umfasst die oben beschriebene Steuervorrichtung, die gerichtete Lichtquelle und eine Empfangseinrichtung, die zum Empfangen von Licht eingerichtet ist, das von einem Objekt im Lichtkegel reflektiert wurde. Die optische Sensoreinrichtung kann insbesondere von einem LiDAR-Scanner umfasst sein.

In einer besonders bevorzugten Ausführungsform ist die Sensoreinrichtung zur Anbringung an einem Kraftfahrzeug eingerichtet. Dabei kann die Abtasteinrichtung zur Bestimmung einer Bewegung des Kraftfahrzeugs eingerichtet sein. Die Abtasteinrichtung kann insbesondere an einer beliebigen Stelle des Kraftfahrzeugs angebracht und mit der Sensoreinrichtung verbunden sein.

### Kurze Beschreibung der Figuren

Die Erfindung wird nun mit Bezug auf die beigefügten Figuren genauer beschrieben, in denen:
Fig. 1 eine optische Sensoreinrichtung an Bord eines Kraftfahrzeugs;
Fig. 2 ein Ablaufdiagramm eines Verfahrens zum Steuern einer optischen Abtasteinrichtung; und
Fig. 3 eine Darstellung der Arbeitsweise eines Kalman-Filters
   darstellt.

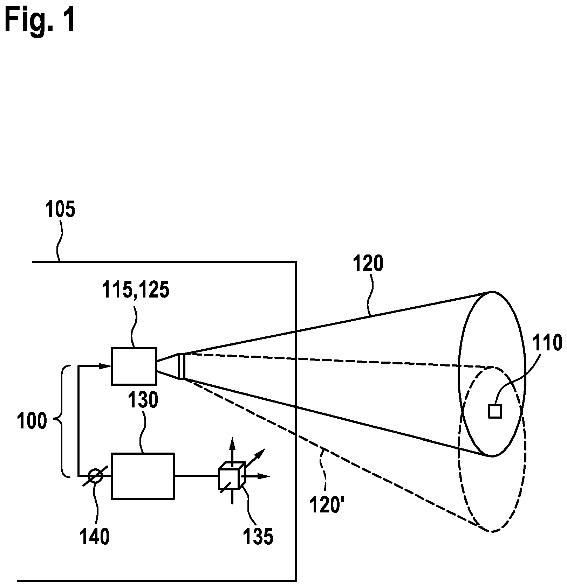

Fig. 1 zeigt eine Sensoreinrichtung 100 an Bord eines Kraftfahrzeugs 105. Die Sensoreinrichtung 100 ist zur optischen Abtastung eines vorbestimmten Bereichs im Umfeld des Kraftfahrzeugs 105 eingerichtet. Insbesondere soll ein Objekt optisch abgetastet werden, wobei eine Größe, Form, Geschwindigkeit oder Beschleunigung bestimmt werden können.

Die optische Sensoreinrichtung 100 umfasst eine Lichtquelle 115, die zum Aussenden eines Lichtkegels 120 eingerichtet ist, eine Empfangseinrichtung 125, die zum Empfangen von Licht eingerichtet ist, das von der Lichtquelle 115 ausgesandt und am Objekt 110 reflektiert wurde, eine Steuervorrichtung 130 und eine Abtasteinrichtung 135. Bevorzugt ist eine Schnittstelle 140 vorgesehen, über die ein Verdunkelungssignal von der Verarbeitungseinrichtung 130 an die Lichtquelle 115 bereitgestellt werden kann.

Die Lichtquelle 115 wird derart angesteuert, dass der Lichtkegel 120 über den vorbestimmten Bereich geführt wird. Dabei kann insbesondere eine Vielzahl Abschnitte 110 vorbestimmt sein, auf die der Lichtkegel 120 in einer vorbestimmten Reihenfolge gerichtet wird. Dabei kann die Lichtquelle 115 kontinuierlich oder nur dann aktiviert werden, wenn ihre Ausrichtung auf einen Abschnitt 110 erfolgt ist.

Das Kraftfahrzeug 105 kann Bewegungen ausgesetzt sein, die eine Ausrichtung oder Fokussierung des Lichtkegels 120 beeinflussen können. Beispielsweise kann eine Vibration, ein Stoß, eine Beschleunigung oder ein anderes unvorhergesehenes Ereignis am Kraftfahrzeug 105 die Lichtquelle 115 bewegen, sodass der Lichtkegel 120 in den Lichtkegel 120' geändert wird. Dadurch kann der Abschnitt 110 ganz oder teilweise länger bzw. mehrfach beleuchtet werden. Befindet sich ein sensibles Objekt, beispielsweise ein menschliches Auge, in diesem Abschnitt 110, so können die Emissionen der Lichtquelle 115 eine Schädigung bewirken.

Es wird vorgeschlagen, mittels der Abtasteinrichtung 135 eine Bewegung des Kraftfahrzeugs 105 oder der Lichtquelle 115 zu bestimmen und mittels der Steuervorrichtung 130 vorherzusagen, wie sich der Lichtkegel 120 aufgrund der Bewegung voraussichtlich verändern wird. Ist es zu befürchten, dass ein Abschnitt 110 länger als vorbestimmt dem Lichtkegel 120 ausgesetzt sein wird, so kann ein Verdunklungssignal an die Lichtquelle 115 bereitgestellt werden. Insbesondere kann die Lichtquelle 115 vorübergehend abgeschaltet werden, bis die Lichtquelle 115 nicht mehr auf den Abschnitt 110 gerichtet ist oder bis der Einfluss auf das Kraftfahrzeug 105 bzw. die Lichtquelle 115 abgeklungen ist.

Die Abtasteinrichtung 135 umfasst bevorzugt einen mikromechanischen Sensor, der insbesondere einen Beschleunigungs- und/oder Drehratensensor umfassen kann. Die Abtasteinrichtung 135 kann als Inertialsensor oder Inertialmesseinheit vorliegen. Bevorzugt können Bewegungen und/oder Beschleunigungen entlang beziehungsweise um drei Achsen abgetastet werden, sodass insgesamt ein Sechsachsensensor gebildet ist. Insbesondere bei Ausführung als mikromechanisches System kann die Abtasteinrichtung 135 kostengünstig und klein sein. In einer Ausführungsform ist die Abtasteinrichtung 135 mechanisch mit der Lichtquelle 115 verbunden und bestimmt deren Bewegung direkt. In einer anderen Ausführungsform ist die Abtasteinrichtung 135 mit dem Kraftfahrzeug 105 verbunden und bestimmt die Bewegung des Kraftfahrzeugs 105, die weiter auch auf die Lichtquelle 115 wirkt.

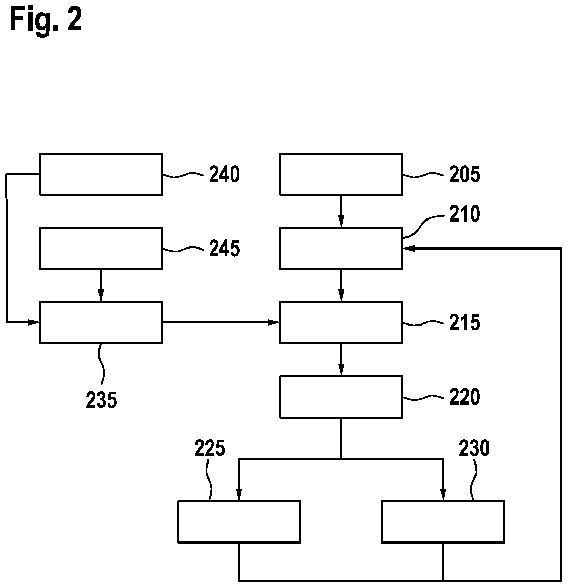

Die Abtasteinrichtung 135 kann noch weiteren Zwecken an Bord des Kraftfahrzeugs 105 dienen, beispielsweise zur Bildkorrektur oder Bildsynchronisation eines Bildes, das mittels der Sensoreinrichtung 100 bereitgestellt wird. Die Steuervorrichtung 130 kann insbesondere einen programmierbaren Mikrocomputer oder Microcontroller umfassen, der dazu eingerichtet ist, ein Verfahren auszuführen, das in Form eines Computerprogrammprodukts vorliegt. Insbesondere kann ein unten mit Bezug auf Fig. 2 beschriebenes Verfahren mittels der Steuervorrichtung 130 ausgeführt werden. Merkmale oder Vorteile des Verfahrens können entsprechend auf die Sensoreinrichtung 100 beziehungsweise die Steuervorrichtung 130 bezogen sein und umgekehrt.

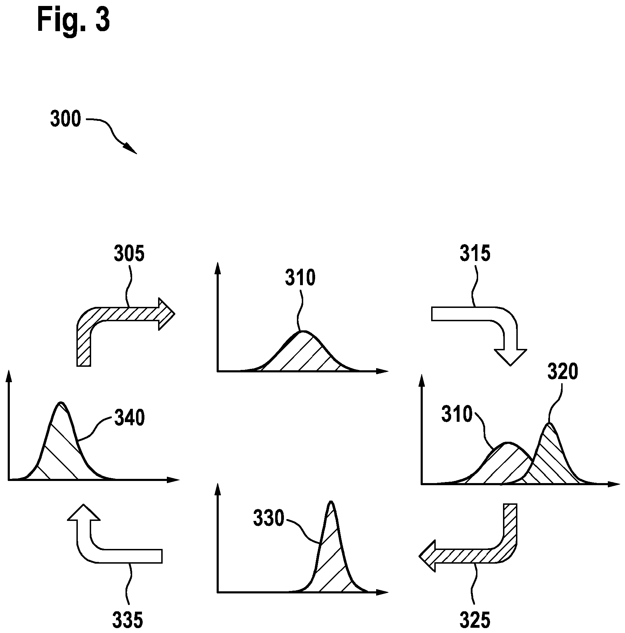

Um eine rechtzeitige Verdunklung oder Abschaltung der Lichtquelle 115 steuern zu können, muss das Verdunklungssignal bereitgestellt werden, bevor eine Überbeleuchtung des Abschnitts 110 eingetreten ist. Die Steuervorrichtung 130 ist daher bevorzugt dazu eingerichtet, eine bevorstehende Änderung des Lichtkegels 120 in den geänderten Lichtkegel 120' zu bestimmen. Dazu kann die Veränderung des Lichtkegels 120 prädiziert werden, insbesondere mittels eines Kalman-Filters, der unten mit Bezug auf Fig. 3 noch genauer beschrieben wird. Bewirkt die prädizierte Änderung eine vorbestimmte Überbeleuchtung des Abschnitts, so kann vor der erfolgten Überbeleuchtung das Verdunkelungssignal bereitgestellt werden.

Fig. 2 zeigt ein Ablaufdiagramm eines Verfahrens 200 zum Steuern einer Lichtquelle 115, 140. Das Verfahren 200 ist bevorzugt zum Ablaufen zumindest teilweise auf der Steuervorrichtung 130 eingerichtet.

In einem Schritt 205 wird mittels der Lichtquelle 115 Licht in Form des Lichtkegels 120 emittiert. Die Lichtquelle 115 wird derart gesteuert, dass der Lichtkegel 120 in einer vorbestimmten Weise über einen vorbestimmten Bereich geführt wird. Eine Vielzahl Abschnitte 110 kann so nacheinander durch den Lichtkegel 120 beleuchtet werden. In einer Ausführungsform erfolgen die Ausrichtung und/oder die Aktivierung der Lichtquelle 115 diskontinuierlich, um nacheinander einzelne vorbestimmte Abschnitte 110 zu beleuchten.

In einem Schritt 210 kann mittels der Abtasteinrichtung 135 eine Bewegung der Lichtquelle 115 bestimmt werden. Die Bewegung kann beispielsweise von einer Beschleunigung oder Erschütterung herrühren, wenn das Kraftfahrzeug 105 durch ein Schlagloch oder über einen Bordstein fährt. Dabei können sich Beschleunigungs- oder Drehratenwerte ergeben, die charakteristisch für die jeweilige Situation sind.

In einem Schritt 215 wird auf der Basis einer oder mehrerer Messungen mittels der Abtasteinrichtung 135 eine Schätzung vorgenommen, ob und wie der Lichtkegel 120 in einen geänderten Lichtkegel 120' geändert wird. Ein Vorhersagezeitraum kann dabei relativ kurz sein, da lediglich sichergestellt werden muss, dass eine Verdunklung oder Abschaltung der Lichtquelle 115 durchgeführt werden kann, noch bevor ein Abschnitt 110 innerhalb eines vorbestimmten Zeitabschnitts mittels der Lichtquelle 115 mit mehr als einer vorbestimmten Energie bestrahlt wird. Der Vorhersagehorizont ist somit in erster Linie von der für die Schätzung im Schritt 215 erforderlichen Verarbeitungszeit abhängig. Weitere Einflussfaktoren können eine Signallaufzeit oder eine Messdauer umfassen.

In einem Schritt 220 wird überprüft, ob eine bevorstehende Lichtemission der Lichtquelle 115 augensicher ist. Dies ist dann der Fall, wenn zumindest mit einer vorbestimmten Wahrscheinlichkeit eine Energiemenge, die auf einen Abschnitt 110 gerichtet wird, einen vorbestimmten Schwellenwert einhält. Ist davon auszugehen, dass die Energiemenge überschritten wird, so kann die Augensicherheit trotzdem gewährleistet sein, wenn die Lichtquelle 115 rechtzeitig verdunkelt oder abgeschaltet wird.

Wurde bestimmt, dass der Betrieb der Lichtquelle 115 augensicher ist, so kann die Lichtquelle 115 in einem Schritt 225 zur Emission von Licht angesteuert werden. Andernfalls kann in einem Schritt 230 ein Verdunklungssignal an die Lichtquelle 115 bereitgestellt werden. In einer weiter bevorzugten Ausführungsform kann das Emittieren von Licht bis zum nächsten Erreichen des Schritts 220 durch die Lichtquelle 115 ausgesetzt werden. In diesem Fall kann eine weitere Veränderung des Lichtkegels 120 insbesondere auf der Basis von Messwerten der Abtasteinrichtung 135 extrapoliert werden. Danach kann das Verfahren 200 zum Schritt 210 zurückspringen und erneut durchlaufen.

Das Schätzen im Schritt 215 erfolgt bevorzugt bezüglich eines Modells 235. Das Modell 235 kann insbesondere eine mathematische Repräsentation der Einflüsse einer Beschleunigung oder einer Drehrate auf die Richtung oder den Öffnungswinkel des Lichtkegels 120 umfassen. Dabei kann auch eine Bestimmungssicherheit berücksichtigt werden, sodass die Schätzung 215 auf der Basis des Modells 235 konservativ ausgeführt werden kann, indem eine Verdunklung bereits dann bewirkt wird, wenn nicht mit ausreichender Sicherheit bestimmt werden kann, dass eine bevorstehende Emission augensicher sein wird.

Das Modell 235 basiert bevorzugt auf einer Beschreibung 240 von Einflüssen oder Situationen und/oder einer Beschreibung 245 einer Augensicherheit. Die Beschreibung 240 kann beispielsweise charakteristische Beschleunigungs- oder Drehratenverläufe umfassen, die typischerweise durchlaufen werden, wenn das Kraftfahrzeug 105 über eine Bodenwelle, durch ein Schlagloch oder über einen Bordstein fährt. So können zukünftige Beschleunigungs- oder Drehratenmessungen im Schritt 210 vorhergesagt werden, wenn genügend Informationen zur Auswahl einer prototypischen Situation vorliegen.

Die Beschreibung 245 der Augensicherheit kann berücksichtigen, mit welcher Leistung die Lichtquelle 115 Licht emittiert. Außerdem kann ein Öffnungswinkel des Lichtkegels 120 berücksichtigt werden, um eine resultierende Lichtenergie in einem vorbestimmten Abstand von der Lichtquelle 115 zu bestimmen. Insgesamt kann die Beschreibung 245 angeben, unter welchen Bedingungen eine Augensicherheit gegeben ist und unter welchen nicht. Dazu kann die Beschreibung 245 insbesondere einer offiziellen Norm zur Einhaltung einer Augensicherheit folgen.

Fig. 3 zeigt eine Darstellung eines beispielhaften Kalman-Filters 300. Ein Kalman-Filter 300 ist eine an sich bekannte und bewährte mathematische Methode, um auf der Basis von Messwerten eine Vorhersage von Parametern zu erlauben, die von den Messwerten abhängen. Der Kalman-Filter 300 kann insbesondere mittels der Steuervorrichtung 130 implementiert beziehungsweise realisiert werden.

Ein Kalman-Filter 300 arbeitet üblicherweise rekursiv. Zur Erklärung des Kalman-Filters 300 kann daher an einer beliebigen Stelle der Darstellung von Fig. 3 begonnen werden. Rein beispielhaft erfolgt zuerst eine Vorhersage 305 einer Zustandsbeschreibung des zu modellierenden physikalischen Systems. Das physikalische System wird üblicherweise durch seine Eingangs- und Ausgangsgrößen beschrieben, wobei Beziehungen zwischen diesen Größen in beliebiger Form zumindest näherungsweise bekannt sind. Interne Größen, die extern nicht beobachtbar sind, können ebenfalls von der Systembeschreibung umfasst sein. Vorliegend können die Eingangsgrößen insbesondere Drehraten- oder Beschleunigungswerte und Ausgangsgrößen eine Richtung (horizontal, vertikal) und/oder einen Öffnungswinkel des Lichtkegels 120 umfassen.

Die Vorhersage 305 liefert somit einen Zustand 310, der beispielsweise als Vektor der Eingangs- und Ausgangsgrößen notiert werden kann. Anschließend erfolgt eine Messung 315 von tatsächlichen Eingangs- und/oder Ausgangsgrößen. Das Messergebnis 320 und der vorhergesagte Zustand 310 können einem Schritt 325 miteinander verglichen werden. Aus der Differenz der beiden ergibt sich eine Korrektur 330, die der weiteren Funktionsweise des Kalman-Filters 300 zugrunde gelegt wird. Insbesondere erfolgt ein Anpassen 335 der bestimmten Werte des Modells, um einen neuen Zustand 340 zu bestimmen, der für einen folgenden Durchlauf des Kalman-Filters 300 verwendet wird.

Bei geeigneter Abstimmung des Kalman-Filters 300 wird die Korrektur 330 nach einigen Durchläufen kleiner, sodass die Vorhersage von Zuständen des zu modellierenden Systems verlässlicher wird. Die Größe der Korrektur 330 kann als Maß für die Zuverlässigkeit einer Vorhersage eines Systemzustands verwendet werden.

## Patentansprüche

1. Verfahren (200) zum Steuern einer gerichteten Lichtquelle (115), deren bereitgestellter Lichtkegel (120) über einen vorbestimmten Bereich geführt wird, wobei das Verfahren (200) folgende Schritte umfasst:
- Bestimmen (210) einer Bewegung der Lichtquelle (115);
- Schätzen (215) einer bevorstehenden Änderung eines mittels des Lichtkegels (120) beleuchteten Abschnitts (110) des Bereichs aufgrund der bestimmten Bewegung;
- Bestimmen (220), dass der Abschnitt (110) durch den geänderten Lichtkegel (120) voraussichtlich länger als vorbestimmt belichtet wird; und
- Bereitstellen (230) eines Verdunkelungssignals für die Lichtquelle (115).

2. Verfahren (200) nach Anspruch 1, wobei mehrere überschneidungsfreie Abschnitte im Bereich vorbestimmt sind und die Abschnitte (110) nacheinander mittels des Lichtkegels (120) für jeweils eine vorbestimmte Zeit beleuchtet werden.

3. Verfahren (200) nach Anspruch 1 oder 2, wobei die voraussichtliche Änderung mittels eines Kalman-Filters (300) bestimmt wird.

4. Verfahren (200) nach einem der vorangehenden Ansprüche, wobei die Änderung eine Ausrichtung der Lichtquelle (115) betrifft.

5. Verfahren (200) nach einem der vorangehenden Ansprüche, wobei die Änderung einen Öffnungswinkel der Lichtquelle (115) betrifft.

6. Verfahren (200) nach einem der vorangehenden Ansprüche, wobei eine Ungenauigkeit von vorliegenden Informationen über den Lichtkegel (120) berücksichtigt wird.

7. Steuervorrichtung (130) für eine gerichtete Lichtquelle (115), deren Lichtkegel (120) über einen vorbestimmten Bereich geführt wird, wobei die Steuervorrichtung folgendes umfasst:
- eine Abtasteinrichtung (135) zur Bestimmung einer Bewegung der Lichtquelle (115);
- eine Verarbeitungseinrichtung (130), die dazu eingerichtet ist, eine bevorstehende Änderung eines mittels des Lichtkegels (120) beleuchteten Abschnitts (110) des Bereichs aufgrund der bestimmten Bewegung zu schätzen; und
- eine Schnittstelle (140) zur Bereitstellung eines Verdunkelungssignals für die Lichtquelle (115), falls der Abschnitt (110) durch den geänderten Lichtkegel (120) voraussichtlich länger als vorbestimmt belichtet wird.

8. Optische Sensoreinrichtung (100), umfassend eine Steuervorrichtung (130) nach Anspruch 7; eine gerichtete Lichtquelle (115) und eine Empfangseinrichtung (125), die zum Empfangen von Licht eingerichtet ist, das von einem Objekt (110) im Lichtkegel (120) reflektiert wurde.

9. Sensoreinrichtung (100) nach Anspruch 8, wobei die Sensoreinrichtung (100) zur Anbringung an einem Kraftfahrzeug (105) und die Abtasteinrichtung (135) zur Bestimmung einer Bewegung des Kraftfahrzeugs (105) eingerichtet ist.

## Claims

1. Method (200) for controlling a directed light source (115), whose provided light cone (120) is guided over a predetermined region, wherein the method (200) comprises the following steps:
- determining (210) a movement of the light source (115);
- estimating (215) an imminent change of a portion (110) of the region that is illuminated by means of the light cone (120), on the basis of the determined movement;
- determining (220) that the portion (110) will probably be lit longer than was predetermined owing to the changed light cone (120), and
- providing (230) a darkening signal for the light source (115) .

2. Method (200) according to Claim 1, wherein a plurality of overlap-free portions in the region are predetermined and the portions (110) are illuminated successively for in each case a predetermined time by means of the light cone (120).

3. Method (200) according to Claim 1 or 2, wherein the expected change is determined by means of a Kalman filter (300) .

4. Method (200) according to one of the preceding claims, wherein the change relates to an orientation of the light source (115).

5. Method (200) according to one of the preceding claims, wherein the change relates to an opening angle of the light source (115).

6. Method (200) according to one of the preceding claims, wherein any inaccuracies of available information relating to the light cone (120) are taken into account.

7. Control apparatus (130) for a directed light source (115), whose light cone (120) is guided over a predetermined region, wherein the control apparatus comprises the following:
- a scanning device (135) for determining a movement of the light source (115);
- a processing device (130), which is configured to estimate an imminent change of a portion (110) of the region that is illuminated by means of the light cone (120), on the basis of the determined movement; and
- an interface (140) for providing a darkening signal for the light source (115) if the portion (110) will probably be lit longer than was predetermined owing to the changed light cone (120).

8. Optical sensor device (100), comprising a control apparatus (130) according to Claim 7; a directed light source (115) and a receiving device (125), which is configured for receiving light that was reflected by an object (110) in the light cone (120).

9. Sensor device (100) according to Claim 8, wherein the sensor device (100) is configured for being mounted to a motor vehicle (105) and the scanning device (135) is configured for determining a movement of the motor vehicle (105).

## Revendications

1. Procédé (200) permettant de commander une source de lumière dirigée (115) dont le cône de lumière fourni (120) est guidé sur une zone prédéterminée, le procédé (200) comprenant les étapes suivantes consistant à :
- déterminer (210) un mouvement de la source de lumière (115) ;
- estimer (215) une modification imminente d'une partie (110) de la zone, éclairée au moyen du cône de lumière (120), en raison du mouvement déterminé ;
- déterminer (220) que la partie (110) sera probablement éclairée plus longtemps que prédéterminé par le cône de lumière modifié (120) ; et
- fournir (230) un signal d'obscurcissement pour la source de lumière (115).

2. Procédé (200) selon la revendication 1, dans lequel plusieurs parties sans chevauchement dans la zone sont prédéterminées, et les parties (110) sont éclairées successivement au moyen du cône de lumière (120) respectivement pendant une durée prédéterminée.

3. Procédé (200) selon la revendication 1 ou 2, dans lequel la modification probable est déterminée au moyen d'un filtre de Kalman (300).

4. Procédé (200) selon l'une quelconque des revendications précédentes, dans lequel la modification concerne une orientation de la source de lumière (115).

5. Procédé (200) selon l'une quelconque des revendications précédentes, dans lequel la modification concerne un angle d'ouverture de la source de lumière (115) .

6. Procédé (200) selon l'une quelconque des revendications précédentes, dans lequel un manque de précision des informations présentes concernant le cône de lumière (120) est pris en compte.

7. Dispositif de commande (130) pour une source de lumière dirigée (115) dont le cône de lumière (120) est guidé sur une zone prédéterminée, le dispositif de commande comprenant :
- un dispositif de balayage (135) pour déterminer un mouvement de la source de lumière (115) ;
- un dispositif de traitement (130) qui est aménagé pour estimer une modification imminente d'une partie (110) de la zone, éclairée au moyen du cône de lumière (120), en raison du mouvement déterminé ; et
- une interface (140) pour fournir un signal d'obscurcissement pour la source de lumière (115) si la partie (110) sera probablement éclairée plus longtemps que prédéterminé par le cône de lumière modifié (120).

8. Dispositif de capteur optique (100), comprenant un dispositif de commande (130) selon la revendication 7, une source de lumière dirigée (115) et un dispositif de réception (125) qui est aménagé pour recevoir la lumière qui a été réfléchie par un objet (110) dans le cône de lumière (120).

9. Dispositif de capteur (100) selon la revendication 8, le dispositif de capteur (100) étant aménagé pour être installé sur un véhicule automobile (105), et le dispositif de balayage (135) étant aménagé pour déterminer un déplacement du véhicule automobile (105).
